# FASCICULE DE BREVET EUROPEEN

(11) **EP 3 083 285 B1**
(45) Date de publication et mention de la délivrance du brevet: **07.02.2018**
(21) Numéro de dépôt: 14824823.0
(22) Date de dépôt: 18.12.2014
(51) Int. Cl.: B60C 11/11, B60C 11/00

(54) **BANDE DE ROULEMENT DE PNEUMATIQUE POUR VEHICULE LOURD DE TYPE GENIE CIVIL**
REIFENLAUFFLÄCHE FÜR BAUMASCHINEN-SCHWERLASTFAHRZEUG
TYRE TREAD FOR HEAVY VEHICLE OF CONSTRUCTION PLANT TYPE

(30) Priorité: 20.12.2013 FR 1363135
(43) Date de publication de la demande: 26.10.2016
(73) Titulaire: Compagnie Générale des Etablissements Michelin, 63000 Clermont-Ferrand (FR)
(72) Inventeur: BONDU, Lucien, 63040 Clermont-Ferrand Cedex 9 (FR)
(74) Mandataire: Millanvois, Patrick Jacques Jean
(86) Numéro de dépôt international: PCT/EP2014/078367
(87) Numéro de publication internationale: WO 2015/091732

(56) Documents cités:
- WO-A1-2010/072234

## Description

La présente invention concerne un pneumatique pour véhicule lourd de type génie civil et, plus particulièrement, la bande de roulement d'un tel pneumatique. Le document WO 2010/072234 A décrit un pneumatique pour véhicule lourd selon le préambule de la revendication 1.

Bien que non limitée à ce type d'application, l'invention sera plus particulièrement décrite en référence à un pneumatique radial de grande dimension, destiné, par exemple, à être monté sur un véhicule lourd de type dumper, destiné à transporter des matériaux extraits de carrières ou de mines de surface.

De façon générale, un pneumatique ayant une géométrie de révolution autour d'un axe de rotation, la géométrie du pneumatique peut être décrite dans un plan méridien contenant l'axe de rotation du pneumatique. Dans ce qui suit, pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. Dans ce qui suit, les expressions « radialement intérieur » et « radialement extérieur» signifient respectivement « plus proche de l'axe de rotation du pneumatique, selon la direction radiale » et « plus éloigné de l'axe de rotation du pneumatique, selon la direction radiale ». Les expressions « axialement intérieur » et « axialement extérieur» signifient respectivement « plus proche du plan équatorial, selon la direction axiale » et « plus éloigné du plan équatorial, selon la direction axiale », le plan équatorial étant le plan perpendiculaire à l'axe de rotation du pneumatique et passant par le milieu de la surface de roulement du pneumatique.

La bande de roulement d'un pneumatique comprend des éléments en relief séparés par des sillons. Un élément en relief s'étend radialement vers l'extérieur à partir d'une surface de fond jusqu'à une face de contact, destinée à venir en contact avec le sol pendant le roulage du pneumatique, sur une hauteur H, et comprend des faces latérales. Un sillon est une découpure de la bande de roulement, délimitée latéralement par des faces latérales d'éléments en relief en vis-à-vis et délimitée radialement vers l'intérieur par un fond de sillon s'appuyant sur la surface de fond.

La bande de roulement d'un pneumatique comprend au moins un premier mélange élastomérique, appelé mélange de base.

Un mélange élastomérique est un matériau comprenant un élastomère diénique de type caoutchouc naturel ou synthétique, obtenu par mélangeage des divers composants du matériau.

Un mélange élastomérique, après cuisson, peut être caractérisé mécaniquement, en particulier, par son allongement à rupture à 23°C. Selon une première méthode de mesure, l'allongement à rupture est mesuré, conformément à la norme française NF T 40-101(décembre 1979), en traction uniaxiale, sur une éprouvette « H2 » de 2.5 mm d'épaisseur étirée jusqu'à rupture, à une vitesse de 500 mm/mn et à une température ambiante de 23°C. Selon une deuxième méthode de mesure préférentielle, l'allongement à rupture est mesuré sur un échantillon de mélange élastomérique, prélevé sur le pneumatique vulcanisé. Selon cette deuxième méthode, on forme, à partir de l'échantillon prélevé, une éprouvette de longueur 18 mm, de largeur 1.1 mm et d'épaisseur 0.3 mm. L'éprouvette issue du pneumatique est prélevée de manière à ce que sa longueur soit perpendiculaire à la direction circonférentielle du pneumatique. Cette éprouvette est ensuite étirée sur un extensomètre à une vitesse de 50 mm/mn à une température de 23° C jusqu'à rupture. On enregistre l'allongement à rupture et la contrainte à rupture sur au moins deux éprouvettes.

La bande de roulement d'un pneumatique doit satisfaire diverses exigences de performances telles que, à titre d'exemples non exhaustifs, la résistance à l'usure, la résistance aux agressions mécaniques, l'adhérence, la résistance au roulement. Les éléments en relief et les sillons de la bande de roulement étant soumis à des sollicitations différentes, il est connu de l'homme du métier qu'un moyen de différencier ces zones est d'utiliser des mélanges élastomériques spécialisés par zone.

Ainsi, il est connu d'utiliser un deuxième mélange élastomérique, appelé mélange de revêtement, superposé au mélange de base et appliqué, en particulier, sur les faces latérales des éléments en relief et dans les fonds de sillons. L'association d'un mélange de base et d'un mélange de revêtement sur les faces latérales et dans les fonds de sillons a été utilisée, dans le passé, pour atteindre divers objectifs :
- améliorer l'adhérence, tel que décrit par les documents EP 1499507, EP 1682360, EP 1682361,
- diminuer la résistance au roulement, tel que décrit par le document WO 2010137143,
- améliorer la tenue des fonds de sillons à la fissuration, tel que décrit par les documents WO 1999037489, WO 2010072234.

Le mélange de recouvrement peut être présent non seulement sur les faces latérales et les fonds de sillons, mais aussi sur les faces de contact des éléments en relief, tel que décrit par les documents US 1719628 et WO 2010072234. Il est à noter que ces documents divulguent un mélange de recouvrement à épaisseur constante, recouvrant l'intégralité de la bande de roulement.

Les inventeurs se sont donnés pour objectif d'améliorer encore la tenue à la fissuration des fonds de sillons d'une bande de roulement de pneumatique pour véhicule lourd de type génie civil.

Cet objectif a été atteint par un pneumatique pour véhicule lourd de type génie civil comprenant :
- une bande de roulement comprenant des éléments en relief séparés par des sillons,
- chaque élément en relief s'étendant radialement vers l'extérieur à partir d'une surface de fond jusqu'à une face de contact sur une hauteur H, et comprenant des faces latérales,
- chaque sillon étant une découpure de la bande de roulement, délimitée latéralement par des faces latérales d'éléments en relief en vis-à-vis et délimitée radialement vers l'intérieur par un fond de sillon s'appuyant sur la surface de fond,
- la bande de roulement comprenant au moins un premier mélange élastomérique, appelé mélange de base, et au moins un deuxième mélange élastomérique, appelé mélange de recouvrement, recouvrant intégralement le mélange de base,
- les mélanges de base et de recouvrement ayant respectivement des allongements à rupture à 23°C A_{R1} et A_{R2},
- le mélange de recouvrement ayant une épaisseur maximale eₘₐₓ constante, au niveau de la face de contact de chaque élément en relief, au plus égale à 0.15 fois la hauteur H de l'élément en relief,
- le mélange de recouvrement ayant une épaisseur minimale eₘᵢₙ constante, au niveau de chaque fond de sillon, au moins égale à 0.04 fois la hauteur H de l'élément en relief
- et l'allongement à rupture à 23°C A_{R2} du mélange de recouvrement étant au moins égal à 1.05 fois l'allongement à rupture à 23°C A_{R1} du mélange de base.

Selon l'invention, le mélange de recouvrement a une épaisseur maximale eₘₐₓ constante, au niveau de la face de contact de chaque élément en relief, au plus égale à 0.15 fois la hauteur H de l'élément en relief. Cette caractéristique traduit le fait que l'épaisseur du mélange de recouvrement est maximale au niveau de la face de contact et que, par ailleurs, cette épaisseur maximale a une limite supérieure. Une limite supérieure de l'épaisseur maximale, au niveau de la face de contact, garantit que le mélange de recouvrement est un mélange de surface constituant une peau d'épaisseur limitée de la bande de roulement. En outre cette épaisseur maximale est constante sur toute la face de contact.

Encore selon l'invention le mélange de recouvrement a une épaisseur minimale eₘᵢₙ constante, au niveau de chaque fond de sillon, au moins égale à 0.04 fois la hauteur H de l'élément en relief. Cette caractéristique traduit le fait que l'épaisseur du mélange de recouvrement est minimale en fond de sillon, et plus précisément au centre du fond de sillon, et que, par ailleurs, cette épaisseur minimale a une limite inférieure. Une limite inférieure de cette épaisseur minimale garantit une présence minimale du mélange de recouvrement en fond de sillon, nécessaire à la protection du fond de sillon vis-à-vis de la fissuration.

En ce qui concerne la variation de l'épaisseur du mélange de recouvrement selon la zone considérée, l'épaisseur du mélange de recouvrement, maximale et constante sur toute la face de contact, décroît au niveau des faces latérales, pour atteindre un minimum en fond de sillon.

Les épaisseurs du mélange de recouvrement, et, en particulier, les épaisseurs minimales et maximales, sont mesurées sur une coupe d'un pneumatique neuf, non usé, par un plan perpendiculaire à l'axe de rotation du pneumatique. En un point donné, l'épaisseur du mélange de recouvrement est mesurée perpendiculairement à la surface extérieure de la bande de roulement. La hauteur H, appelée communément hauteur de sculpture à l'état neuf, est également mesurée sur une coupe de pneumatique.

Enfin, selon l'invention, l'allongement à rupture à 23°C A_{R2} du mélange de recouvrement est au moins égal à 1.05 fois l'allongement à rupture à 23°C A_{R1} du mélange de base. Cette caractéristique garantit que l'allongement à rupture du mélange de recouvrement est suffisant pour permettre au mélange de recouvrement d'absorber les déformations imposées en fond de sillon par les sollicitations mécaniques exercées sur la bande de roulement en roulage, sans que celui-ci ne se fissure.

Avantageusement l'épaisseur minimale eₘᵢₙ du mélange de recouvrement, au niveau de chaque fond de sillon, est au moins égale à 1 mm. Une telle limite inférieure de l'épaisseur minimale du mélange de recouvrement correspond à un minimum technologique vis-à-vis de la fabrication.

Egalement avantageusement l'épaisseur maximale eₘₐₓ du mélange de recouvrement, au niveau de la face de contact de chaque élément en relief, est au plus égale à 10 mm. Une telle limite supérieure de l'épaisseur maximale du mélange de recouvrement permet de limiter l'élévation de température de la bande de roulement, et donc de ne pas dégrader l'endurance du sommet du pneumatique.

Préférentiellement l'allongement à rupture à 23°C A_{R2} du mélange de recouvrement est au moins égal à 1.08 fois l'allongement à rupture à 23°C A_{R1} du mélange de base.

Il est avantageux que le mélange de base comprenne un élastomère diénique de type caoutchouc naturel (NR). Le choix du caoutchouc naturel comme élastomère diénique pour le mélange de base permet de limiter l'élévation de température de la bande de roulement, et donc de ne pas dégrader l'endurance du sommet du pneumatique.

Il est également avantageux que le mélange de recouvrement comprenne un coupage d'élastomères diéniques de type NR/SBR ou NR/BR/SBR, NR désignant un caoutchouc naturel, BR un polybutadiène et SBR un copolymère styrène-butadiène. A titre d'exemple, un coupage d'élastomères diéniques de type NR/SBR peut comprendre 20% de NR et 80% de SBR. Le choix d'un coupage d'élastomères diéniques de type NR/SBR ou NR/BR/SBR pour le mélange de recouvrement permet de garantir une bonne tenue à la fissuration, en particulier en fond de sillon.

Les caractéristiques de l'invention seront mieux comprises à l'aide de la description des figures 1 à 3 en annexe, non représentées à l'échelle:
- la figure 1 est une vue de dessus d'une portion de bande de roulement d'un pneumatique pour véhicule lourd de type génie civil, selon l'invention,
- la figure 2 est une vue en coupe, selon un plan perpendiculaire à l'axe de rotation du pneumatique, d'une portion de bande de roulement d'un pneumatique pour véhicule lourd de type génie civil, selon l'invention,
- la figure 3 est un graphique représentant l'évolution de l'épaisseur du mélange de recouvrement depuis le milieu d'une face de contact jusqu'au milieu d'un fond de sillon.

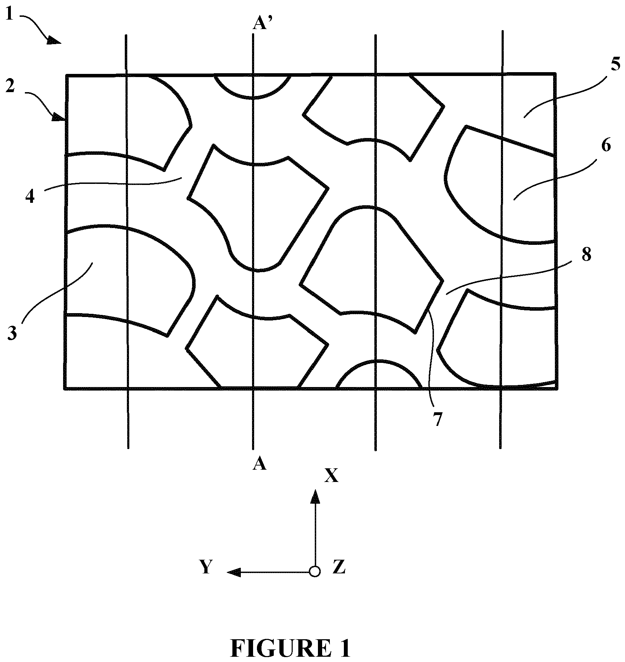

Sur la figure 1, est représentée un vue de dessus d'une portion de bande de roulement 2 d'un pneumatique 1 pour véhicule lourd de type génie civil, selon l'invention. La bande de roulement 2 comprend des éléments en relief 3 séparés par des sillons 4. Chaque élément en relief 3 s'étend radialement vers l'extérieur à partir d'une surface de fond 5 jusqu'à une face de contact 6 sur une hauteur H - non représentée car perpendiculaire au plan de la figue -, et comprend des faces latérales 7. Chaque sillon 4 est une découpure de la bande de roulement 2, délimitée latéralement par des faces latérales 7 d'éléments en relief 3 en vis-à-vis et délimitée radialement vers l'intérieur par un fond de sillon 8 s'appuyant sur la surface de fond 5. Sont également représentés des plans de coupe circonférentiels AA', parallèles au plan équatorial du pneumatique, le plan équatorial étant le plan perpendiculaire à l'axe de rotation du pneumatique et passant par le milieu de la bande roulement.

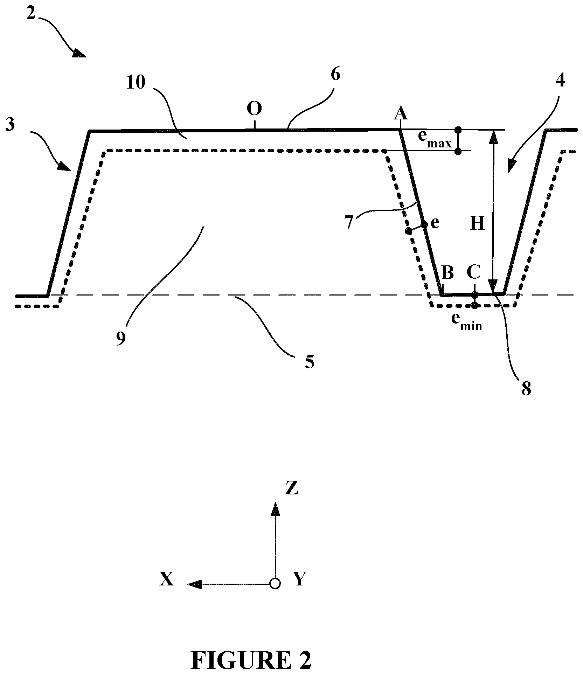

Sur la figure 2, est représentée une vue en coupe, selon un plan de coupe AA' tel que représenté sur la figure 1, d'une portion de bande de roulement d'un pneumatique pour véhicule lourd de type génie civil, selon l'invention. En plus des éléments décrits pour la figure 1, il apparaît, sur la figure 2, que la bande de roulement 2 comprend un premier mélange élastomérique, appelé mélange de base 9, qui est le composant majoritaire de la bande de roulement 2, et un deuxième mélange élastomérique, appelé mélange de recouvrement 10, recouvrant intégralement le mélange de base 9, qui est un composant de surface ou de peau. La figure 2 présente, en coupe, un élément en relief 3 comprenant une face de contact 6 et deux faces latérales 7, l'élément en relief 3 s'étendant radialement vers l'extérieur depuis la surface de fond 5 (en pointillés) jusqu' à la face de contact 6. Elle montre également un sillon 4, délimitée axialement par les faces latérales 7 respectives de deux éléments en relief 3 en vis-à-vis, et délimité radialement à l'intérieur par un fond de sillon 8 positionné au niveau de la surface de fond 5. La figure 2 montre, en particulier, la variation de l'épaisseur e du mélange de recouvrement 10 selon la zone de la bande de roulement. Au niveau de la face de contact 6, ayant un milieu O et une extrémité axiale A, l'épaisseur du mélange de recouvrement 10 est constante et a une valeur maximale eₘₐₓ, au plus égale à 0.15 fois la hauteur H de l'élément en relief 3. L'épaisseur maximale eₘₐₓ est mesurée au point O, milieu de la face de contact 6. Puis l'épaisseur e du mélange de recouvrement 10 décroît depuis l'extrémité axiale A de la face de contact 6, confondue avec l'extrémité radialement extérieure de la face latérale 7, jusqu'à l'extrémité radialement intérieure B de la face latérale 7. Puis, en fond de sillon 8, l'épaisseur du mélange de recouvrement 10 est à nouveau sensiblement constante et est égale à une valeur minimale eₘᵢₙ au moins égale à 0.04 fois la hauteur H de l'élément en relief 3. L'épaisseur minimale eₘᵢₙ est mesurée au point C, milieu du fond de sillon 8.

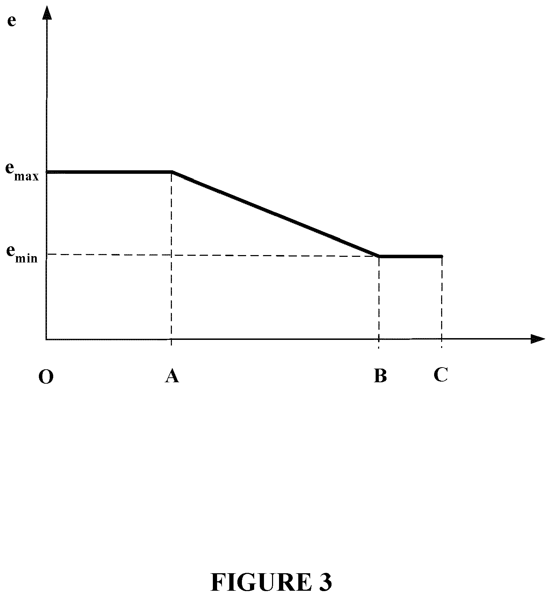

La figure 3 est un graphique représentant l'évolution de l'épaisseur e du mélange de recouvrement 10 depuis le milieu O d'une face de contact 6 jusqu'au milieu C d'un fond de sillon 8. Comme vu précédemment, l'épaisseur e est constante et égale à la valeur maximale eₘₐₓ entre le milieu O et l'extrémité axiale A de la face de contact 6, puis est décroissante depuis l'extrémité axiale A de la face de contact 6 jusqu'à l'extrémité radialement intérieure B de la face latérale 7 où elle atteint une valeur minimale eₘᵢₙ, et reste constante et égale à cette valeur minimale eₘᵢₙ jusqu' au milieu C du fond de sillon 8.

L'invention a été en particulier étudiée dans le cas d'un pneumatique 29.5R25 pour dumper articulé.

Des mesures d'épaisseurs ont été réalisées dans deux plans de coupe circonférentiels, respectivement axialement positionnés dans une portion latérale de la bande de roulement, proche du bord de la bande de roulement, et dans une portion centrale de la bande de roulement. Les résultats obtenus sont présentés dans le tableau A ci-dessous :

**Tableau A**

| H=40 mm | eₘₐₓ (mm) | eₘᵢₙ (mm) | eₘₐₓ/H | eₘᵢₙ/H |
|---|---|---|---|---|
| Plan de coupe portion latérale | 4 | 2.5 | 0.10 | 0.06 |
| Plan de coupe portion centrale | 4.5 | 2 | 0.11 | 0.05 |

Des mesures d'allongements à rupture ont été réalisées sur des échantillons prélevés sur le pneumatique, respectivement dans le mélange de recouvrement et dans le mélange de base, sous la forme d'éprouvettes de longueur 18 mm, de largeur 1.1 mm et d'épaisseur 0.3 mm, soumises à une traction uniaxiale jusqu'à rupture, à une vitesse de 50 mm/mn et à une température de 23° C. Pour chacun des mélanges élastomériques, les allongements à rupture et les contraintes à rupture sont des moyennes de résultats obtenus sur au moins deux éprouvettes.

Les résultats obtenus sont présentés dans le tableau B ci-dessous :

**Tableau B**

| | Mélange de recouvrement | Mélange de base | Ratios |
|---|---|---|---|
| Allongement à rupture moyen à 23°C (%) | 814 | 752 | 1.08 |
| Contrainte à rupture moyenne à 23°C (MPa) | 21.7 | 24.6 | 0.88 |

## Revendications

1. - Pneumatique (1) pour véhicule lourd de type génie civil comprenant :
- une bande de roulement (2) comprenant des éléments en relief (3) séparés par des sillons (4),
- chaque élément en relief (3) s'étendant radialement vers l'extérieur à partir d'une surface de fond (5) jusqu'à une face de contact (6) sur une hauteur H, et comprenant des faces latérales (7),
- chaque sillon (4) étant une découpure de la bande de roulement (2), délimitée latéralement par des faces latérales (7) d'éléments en relief (3) en vis-à-vis et délimitée radialement vers l'intérieur par un fond de sillon (8) s'appuyant sur la surface de fond (5),
- la bande de roulement (2) comprenant au moins un premier mélange élastomérique, appelé mélange de base (9), et au moins un deuxième mélange élastomérique, appelé mélange de recouvrement (10), recouvrant intégralement le mélange de base (9),
- les mélanges de base (9) et de recouvrement (10) ayant respectivement des allongements à rupture à 23°C A_{R1} et A_{R2},
**caractérisé en ce que** le mélange de recouvrement (10) a une épaisseur maximale eₘₐₓ constante, au niveau de la face de contact (6) de chaque élément en relief (3), au plus égale à 0.15 fois la hauteur H de l'élément en relief (3), **en ce que** le mélange de recouvrement (10) a une épaisseur minimale eₘᵢₙ constante, au niveau de chaque fond de sillon (8), au moins égale à 0.04 fois la hauteur H de l'élément en relief (3) **et en ce que** l'allongement à rupture à 23°C A_{R2} du mélange de recouvrement (10) est au moins égal à 1.05 fois l'allongement à rupture à 23°C A_{R1} du mélange de base (9).

2. **-** Pneumatique pour véhicule lourd de type génie civil selon la revendication 1, **dans lequel** l'épaisseur minimale eₘᵢₙ du mélange de recouvrement (10), au niveau de chaque fond de sillon (8), est au moins égale à 1 mm.

3. **-** Pneumatique pour véhicule lourd de type génie civil selon l'une quelconque des revendications 1 ou 2, **dans lequel** l'épaisseur maximale eₘₐₓ du mélange de recouvrement (10), au niveau de la face de contact (6) de chaque élément en relief (3), est au plus égale à 10 mm.

4. **-** Pneumatique pour véhicule lourd de type génie civil selon l'une quelconque des revendications 1 à 3, **dans lequel** l'allongement à rupture à 23°C A_{R2} du mélange de recouvrement (10) est au moins égal à 1.08 fois l'allongement à rupture à 23°C A_{R1} du mélange de base (9).

5. **-** Pneumatique pour véhicule lourd de type génie civil selon l'une quelconque des revendications 1 à 4, **dans lequel** le mélange de base (9) comprend un élastomère diénique de type caoutchouc naturel (NR).

6. **-** Pneumatique pour véhicule lourd de type génie civil selon l'une quelconque des revendications 1 à 5, **dans lequel** le mélange de recouvrement (10) comprend un coupage d'élastomères diéniques de type NR/SBR ou NR/BR/SBR, NR désignant un caoutchouc naturel, BR un polybutadiène et SBR un copolymère styrène-butadiène.

## Patentansprüche

1. Reifen (1) für ein Baumaschinen-Schwerlastfahrzeug, umfassend:
- einen Laufstreifen (2) mit Reliefelementen (3), die durch Rillen (4) getrennt sind,
- wobei sich jedes Reliefelement (3) von einer Bodenfläche (5) aus bis zu einer Kontaktfläche (6) über eine Höhe H radial nach außen erstreckt und Seitenflächen (7) umfasst,
- wobei jede Rille (4) eine Vertiefung des Laufstreifens (2) ist, die seitlich durch Seitenflächen (7) von einander gegenüber liegenden Reliefelementen (3) begrenzt wird und radial nach innen durch einen Rillenboden (8) begrenzt wird, der sich auf der Bodenfläche (5) abstützt,
- wobei der Laufstreifen (2) mindestens eine erste Elastomermischung, Grundmischung (9) genannt, und mindestens eine zweite Elastomermischung, Überzugsmischung (10) genannt, die die Grundmischung (9) vollständig überzieht, umfasst,
- wobei die Grundmischung (9) und die Überzugsmischung (10) Bruchdehnungen bei 23°C A_{R1} und A_{R2} aufweisen,
**dadurch gekennzeichnet, dass** die Überzugsmischung (10) eine konstante maximale Dicke eₘₐₓ auf Ebene der Kontaktfläche (6) jedes Reliefelements (3) von höchstens gleich dem 0,15-Fachen der Höhe H des Reliefelements (3) hat, dass die Überzugsmischung (10) eine konstante minimale Dicke eₘᵢₙ auf Ebene jedes Rillenbodens (8) von mindestens gleich dem 0,04-Fachen der Höhe H des Reliefelements (3) hat und dass die Bruchdehnung bei 23°C A_{R2} der Überzugsmischung (10) mindestens gleich dem 1,05-Fachen der Bruchdehnung bei 23°C A_{R1} der Grundmischung (9) ist.

2. Reifen für ein Baumaschinen-Schwerlastfahrzeug nach Anspruch 1, wobei die minimale Dicke eₘᵢₙ der Überzugsmischung (10) auf Ebene jedes Rillenbodens (8) mindestens gleich 1 mm ist.

3. Reifen für ein Baumaschinen-Schwerlastfahrzeug nach einem der Ansprüche 1 oder 2, wobei die maximale Dicke eₘₐₓ der Überzugsmischung (10) auf Ebene jeder Kontaktfläche (6) jedes Reliefelements (3) mindestens gleich 10 mm ist.

4. Reifen für ein Baumaschinen-Schwerlastfahrzeug nach einem der Ansprüche 1 bis 3, wobei die Bruchdehnung bei 23°C A_{R2} der Überzugsmischung (10) mindestens gleich dem 1,08-Fachen der Bruchdehnung bei 23°C A_{R1} der Grundmischung (9) ist.

5. Reifen für ein Baumaschinen-Schwerlastfahrzeug nach einem der Ansprüche 1 bis 4, wobei die Grundmischung (9) ein Dienelastomer vom Typ Naturkautschuk (NR) umfasst.

6. Reifen für ein Baumaschinen-Schwerlastfahrzeug nach einem der Ansprüche 1 bis 5, wobei die Überzugsmischung (10) einen Verschnitt von Dienelastomeren vom Typ NR/SBR oder NR/BR/SBR umfasst, wobei NR einen Naturkautschuk, BR ein Polybutadien und SBR ein Styrol-Butadien-Copolymer bezeichnet.

## Claims

1. - Tyre (1) for a heavy vehicle of construction plant type, comprising:
- a tread (2) comprising raised elements (3) separated by grooves (4),
- each raised element (3) extending radially outwards from a bottom surface (5) as far as a contact face (6) over a height H and comprising lateral faces (7),
- each groove (4) being a cut in the tread (2) which cut is delimited laterally by lateral faces (7) of raised elements (3) that face one another and is delimited radially towards the inside by a groove bottom (8) resting on the bottom surface (5),
- the tread (2) comprising at least one first elastomeric compound, referred to as base compound (9), and at least one second elastomeric compound, referred to as painting compound (10), fully covering the base compound (9),
- the base compound (9) and coating compound (10) respectively having elongations at break at 23°C A_{R1} and A_{R2},
**characterized in that** the coating compound (10) has a constant maximum thickness eₘₐₓ, at the contact face (6) of each raised element (3), at most equal to 0.15 times the height H of the raised element (3), **in that** the coating compound (10) has a constant minimum thickness eₘᵢₙ, at each groove bottom (8), at least equal to 0.04 times the height H of the raised element (3), **and in that** the elongation at break at 23°C A_{R2} of the coating compound (10) is at least equal to 1.05 times the elongation at break at 23°C A_{R1} of the base compound (9).

2. **-** Tyre for a heavy vehicle of construction plant type according to Claim 1, **in which** the minimum thickness eₘᵢₙ of the coating compound (10) at each groove bottom (8) is at least equal to 1 mm.

3. **-** Tyre for a heavy vehicle of construction plant type according to either one of Claims 1 and 2, **in which** the maximum thickness eₘₐₓ of the coating compound (10) at the contact face (6) of each raised element (3) is at most equal to 10 mm.

4. **-** Tyre for a heavy vehicle of construction plant type according to any one of Claims 1 to 3, **in which** the elongation at break at 23°C A_{R2} of the coating compound (10) is at least equal to 1.08 times the elongation at break at 23°C A_{R1} of the base compound (9).

5. **-** Tyre for a heavy vehicle of construction plant type according to any one of Claims 1 to 4, **in which** the base compound (9) contains a diene elastomer of natural rubber (NR) type.

6. **-** Tyre for a heavy vehicle of construction plant type according to any one of Claims 1 to 5, **in which** the coating compound (10) comprises a blend of diene elastomers of NR/SBR or NR/BR/SBR type, NR denoting a natural rubber, BR a polybutadiene and SBR a styrenebutadiene copolymer.
